# EUROPÄISCHE PATENTANMELDUNG

(11) **EP 1 182 365 A2**
(43) Veröffentlichungstag der Anmeldung: **27.02.2002**
(21) Anmeldenummer: 01115627.0
(22) Anmeldetag: 03.07.2001
(51) Int. Cl.: F16B 27/00

(54) **Befestigungselemente-Magazin**

(30) Priorität: 18.08.2000 DE 10040437
(71) Anmelder: EJOT Baubefestigungen GmbH, D-57334 Bad Laasphe (DE)
(72) Erfinder: Dratschmidt, Frank, Dr., 57319 Bad Berleburg (DE); Schukey, Hartmut, 57319 Bad Berleburg (DE)
(74) Vertreter: Heselberger, Johannes

(57) **Zusammenfassung**

Vorrichtung (1) zur Aufnahme von mindestens zwei Befestigungselementen (10), wobei die Befestigungselemente (10) einen tellerförmigen Kopf (11) und einen Schaft (12) aufweisen, und wobei die Vorrichtung (1) eine C-förmige Schiene (2) zum beidseitigen Umfassen des tellerförmigen Kopfes (11) der Befestigungselemente (10) aufweist, wobei die Vorrichtung (1) an mindestens einem Ende der C-förmigen Schiene (2) eine Halteeinrichtung (6,7) aufweist, die die Befestigungselemente (10) in der C-förmigen Schiene (2) hält und die durch Kraftanwendung auf die Befestigungselemente (10) in Richtung der Halteeinrichtung (6,7) entlang der C-förmigen Schiene (2) ohne Veränderung der Halteeinrichtung (6,7) überwunden werden kann, sowie ein Verfahren zur Herstellung einer solchen Vorrichtung.

## Beschreibung

Die Erfindung betrifft eine Vorrichtung zur Aufnahme von Befestigungselementen, insbesondere zur Aufnahme von Haltetellern aus Kunststoff und zum Führen der Halteteller beim Nachfüllen der Halteteller in ein Setzgerät, sowie ein Verfahren zur Herstellung einer solchen Vorrichtung.

Befestigungselemente werden für die unterschiedlichsten Arten von Verbindungen verwendet. Ein Beispiel für eine solche Verbindung ist die trittsichere mechanische Befestigung von Dämmstoffen und Dachbahnen auf Stahlprofilblechen und Holzschalungen. Für diese Befestigung kann ein Halteteller aus Kunststoff verwendet werden, der aus einem Kopf und einem daran anschließenden Schaft besteht. In dem Schaft befindet sich etwa eine Schraube, mit der der Halteteller an der Unterkonstruktion befestigt werden kann.

Zur einfachen Montage von solchen Haltetellern aus Kunststoff werden sogenannte Setzgeräte verwendet. Solche Setzgeräte bestehen aus einer Halterung für Halteteller und einer Setzvorrichtung. Mit Hilfe einer derartigen Setzeinrichtung können die Halteteller schnell und präzise durch die Dämmstoffe und Dachbahnen hindurch in dem Dach befestigt werden.

Um die Halteteller einfach zu transportieren und das Setzgerät einfach Nachfüllen zu können, gibt es im Stand der Technik verschiedene Ansätze mehrere Halteteller miteinander zu magazinieren.

In dem Europäischen Patent 0 600 284 ist ein Befestigungselement, insbesondere für die Befestigung einer Dämmschicht oder von Dachabdichtungsbahnen an einer Unterkonstruktion, beschrieben, das an dem Rand des Tellers des Befestigungselements eine offene Ausnehmung aufweist, die ein Ineinanderschieben und damit ein Aneinanderreihen von mehreren Befestigungselementen ermöglicht. Derart aneinandergereihte Befestigungselemente sind allerdings sehr instabil. Diese Instabilität erschwert den Transport und das Nachfüllen der Befestigungselemente in die Halterung des Setzgeräts wesentlich. Darüber hinaus müssen die Befestigungselemente bei dieser Realisierung in dem Setzgerät auch erst aufwendig vereinzelt werden.

In dem Gebrauchsmuster DE 299 20 176 wird ein Magazinstreifen beschrieben, mit dem Befestigungselemente miteinander verkettet werden können. Zu diesem Zweck werden die Befestigungselemente mit ihren Schäften auf dem Magazinstreifen aufgereiht. Auch diese Anordnung der Befestigungselemente ist relativ instabil und außerdem müssen auch hier die Befestigungselemente in einem zusätzlichen Arbeitsschritt vereinzelt werden, bevor sie von dem Setzgerät eingesetzt werden können.

Im Stand der Technik ist außerdem eine Magazinschiene bekannt, die C-förmig ausgebildet ist und deren beide Enden nach Art einer Kartonlasche doppelt umgebogen und unter den Enden des C verklemmt werden. Dieses Magazin ist allerdings in der Herstellung und Verwendung sehr arbeitsaufwendig, da die Laschen beim Befüllen und beim Entnehmen umgebogen und verklemmt werden müssen.

Eine Aufgabe der vorliegenden Erfindung ist es deshalb eine Vorrichtung bereitzustellen von der Befestigungselemente so aufgenommen werden können, daß die Befestigungselemente auf einfache Weise transportiert und in ein entsprechendes Setzgerät nachgefüllt werden können. Die Vorrichtung sollte außerdem möglichst einfach und kostengünstig herstellbar sein und sich insbesondere dadurch auszeichnen, daß sowohl die Herstellung als auch die Befüllung der Vorrichtung mit den Befestigungselementen einfach automatisiert durchgeführt werden kann. Eine weitere Aufgabe der vorliegenden Erfindung ist es ein Verfahren zur Herstellung einer solchen Vorrichtung bereitzustellen.

Erfindungsgemäß werden diese Aufgaben durch die Bereitstellung einer Vorrichtung zur Aufnahme von mindestens zwei Befestigungselementen gelöst, wobei die Befestigungselemente einen tellerförmigen Kopf und einen Schaft aufweisen, und
wobei die Vorrichtung eine C-förmige Schiene zum beidseitigen Umfassen des tellerförmigen Kopfes der Befestigungselemente aufweist, und die Vorrichtung an mindestens einem Ende der C-förmigen Schiene eine Halteeinrichtung aufweist, die die Befestigungselemente in der C-förmigen Schiene hält und die durch Kraftanwendung auf die Befestigungselemente in Richtung der Halteeinrichtung entlang der C-förmigen Schiene ohne Veränderung der Halteeinrichtung überwunden werden kann.

Im Rahmen der vorliegenden Erfindung umfaßt der Begriff Befestigungselement alle Befestigungselemente, die wenigstens einen tellerförmigen Kopf bzw. Teller und einen daran anschließenden Schaft umfassen. Dabei kann das Befestigungselement aus den unterschiedlichsten Materialien, also nicht nur aus Kunststoff, hergestellt sein und auch über weitere Merkmale, wie beispielsweise eine in dem Befestigungselement befindlichen Schraube, verfügen.

Erfindungsgemäß werden mindestens zwei dieser Befestigungselemente von einer C-förmigen Schiene aufgenommen. Diese Schiene besteht beispielsweise aus einem geformten flächigen Material, wobei das Material so geformt ist, daß der Querschnitt durch die Schiene senkrecht zu der Längsachse einem C ähnelt. In dieser Schiene sind die Befestigungselemente so aufgereiht, daß der Teller des Befestigungselements in dem Innenraum des Cs angeordnet ist und der Schaft des Befestigungselements durch die Öffnung des Cs herausragt.

Die C-förmige Schiene besteht vorzugsweise aus einem Material, welches eine ausreichende Festigkeit zum Transport und Hantieren der Vorrichtung bereitstellt. Die Verwendung eines festen Materials ermöglicht die leichte Handhabung der Vorrichtung. Dabei kann die benötigte Festigkeit der Vorrichtung sowohl aus dem Material an sich, als auch aus der Kombination der Schiene mit den darin enthaltenen Befestigungselementen entstehen.

Dabei gibt es verschiedene Möglichkeiten, wie die mindestens zwei Befestigungselemente in der C-förmigen Schiene nebeneinander angeordnet sein können. So können die Teller der Befestigungselemente beabstandet voneinander in der C-förmigen Schiene aufgereiht sein, die benachbarten Teller können sich an den Rändern berühren und die benachbarten Teller können auch überlappend angeordnet sein. Eine überlappende Anordnung kann den Vorteil haben, daß bei geeigneten Abmessungen der C-förmigen Schiene die Befestigungselemente in der Schiene durch die Reibung der Befestigungselemente gegen die Schiene relativ fest sitzen.

Erfindungsgemäß weist die C-förmige Schiene an mindestens einem Ende eine Halteeinrichtung auf. Diese Halteeinrichtung ist dazu geeignet die Befestigungselemente in der C-förmigen Schiene zu halten. Darüber hinaus können die Befestigungselemente aber erfindungsgemäß durch Kraftaufwendung in Richtung der Halteeinrichtung entlang der C-förmigen Schiene aus der C-förmigen Schiene entfernt werden ohne die Halteeinrichtung zu verändern.

Im Rahmen der vorliegenden Erfindung sind Halteeinrichtungen jegliche Art von Einrichtungen, die geeignet sind die Befestigungselemente in der C-förmigen Schiene zu halten. Darüber hinaus muß im Rahmen der vorliegenden Erfindung die Halteeinrichtung allerdings so gestaltet sein, daß durch Kraftanwendung diese Halteeinrichtung überwunden werden kann ohne die Halteeinrichtung zu verändern, um die Befestigungselemente aus der Schiene zu entfernen und in das Setzgerät einzuführen. Dabei kann es sich bei der Halteeinrichtung sowohl um ein Teil der C-förmigen Schiene handeln, als auch um ein an der Schiene angeordnetes Teil.

Erfindungsgemäß kann die Halteeinrichtung ohne Veränderung der Halteeinrichtung von den Befestigungselementen überwunden werden. Das heißt, daß die Halteeinrichtung nach dem Entfernen der Befestigungselemente immer noch dafür geeignet ist Befestigungselemente zu halten und ohne daß an die Halteeinrichtung Hand angelegt werden muß. Die Verwendung einer derartigen Vorrichtung ermöglicht beispielsweise, daß nur ein Teil der Befestigungselemente durch Kraftanwendung auf die Befestigungselemente in Richtung der Halteeinrichtung aus der Vorrichtung entfernt wird, während die restlichen Befestigungselemente in der Vorrichtung verbleiben und weiterhin durch die ohne Veränderung vorhandene Halteeinrichtung gehalten werden.

Vorzugsweise werden im Rahmen der vorliegenden Erfindung Rastnocken als Halteeinrichtungen verwendet. Bei Rastnocken handelt es sich vorzugsweise um im wesentlichen kugelförmige Abschnitte. Diese Rastnocken sind vorzugsweise so angeordnet, daß sie von der C-förmigen Schiene in den Innenraum ragen. Um die Befestigungselemente in der C-förmigen Schiene zu Halten werden diese Rastnocken vorzugsweise an mindestens einem Ende der Schiene angeordnet. Durch diese Rastnocken wird der Widerstand gegen das selbständige Herausrutschen an dem Ende der Schiene wesentlich erhöht. Dieser Widerstand ist so hoch, daß er durch das Eigengewicht der Befestigungselemente nicht überwunden werden kann. Um die Befestigungselemente allerdings in das Setzgerät nachfüllen zu können reicht eine leichte Kraftanwendung aus, um die Rastnocken zu überwinden.

In einer bevorzugten Ausführungsform der vorliegenden Erfindung werden die Rastnocken so in der C-förmigen Schiene angeordnet, daß sie sich gegenüber der Öffnung der C-förmigen Schiene befinden. Dies ist die Seite über die sich der Teller mit der dem Schaft abgewandten Seite befindet. In dieser Seite befindet sich vorzugsweise eine Öffnung, durch die eine eventuell in dem Befestigungselement vorhandene Schraube befestigt werden kann.

Im Rahmen der vorliegenden Erfindung weisen die Rastnocken vorzugsweise einen Durchmesser auf, der dem Durchmesser der Öffnung in dem Befestigungselement entspricht, d.h. die Abmessungen werden vorzugsweise so gewählt, daß die Rastnocke in die Öffnung in dem Befestigungselement eindringen kann. Durch diese Konstellation werden die Befestigungselemente gegen selbständiges Herausrutschen aus der Schiene doppelt gesichert. Sollte das erste Befestigungselement aus irgend einem Grund über einen kurzen Zeitraum über eine Kraft verfügen, die es ihm ermöglicht den Rand des ersten Befestigungselements auf die Rastnocken zu schieben, wird dieses Befestigungselement trotzdem noch gehalten. Denn die Öffnung in dem Teller des Befestigungselements nimmt dann den Rastnocken auf und verhindert so ein selbständiges Herausrutschen des Befestigungselements aus der C-förmigen Schiene. Erst nach einer erneuten Kraftanwendung kann dieses Befestigungselement aus der C-förmigen Schiene entnommen werden.

Im Rahmen der vorliegenden Erfindung wird außerdem ein Verfahren zur Herstellung einer Vorrichtung zur Aufnahme von Befestigungselementen beansprucht, wobei das Verfahren die folgenden Schritte umfaßt:
- Befüllung einer C-förmigen Schiene mit Befestigungselementen, und
- Anbringen einer Halteeinrichtung an mindestens einem Ende der C-förmigen Schiene,
wobei die Halteeinrichtung die Befestigungselemente in der C-förmigen Schiene hält und die Halteeinrichtung durch Kraftanwendung auf die Befestigungselemente in Richtung der Halteeinrichtung entlang der C-förmigen Schiene ohne Veränderung der Halteeinrichtung überwunden werden kann.

Bei der Verwendung dieses erfinderischen Verfahrens werden die Befestigungselemente nach der Herstellung in einer C-förmigen Schiene aufgereiht. Dabei ist vorzugsweise ein Ende der C-förmigen Schiene bereits gegen das Herausrutschen von Befestigungselementen gesichert. Sobald sich die gewünschte Anzahl von Befestigungselementen in der C-förmigen Schiene befinden, wird in einem weiteren Schritt an dem anderen Ende der C-förmigen Schiene eine Haltevorrichtung angebracht. Bei dieser Halteeinrichtung handelt es sich vorzugsweise um einen Rastnocken, der vorzugsweise durch thermoplastische Verformung an einem Ende der C-förmigen Schiene gebildet wird.

Im Rahmen der vorliegenden Erfindung wird des weiteren die Verwendung einer oben beschriebenen Vorrichtung zur Aufnahme von Befestigungselementen, insbesondere zur Aufnahme von Haltetellern aus Kunststoff zur Befestigung von Dämmstoffen und Dachbahnen an einer Unterkonstruktion beansprucht.

Im folgenden werden Ausführungsbeispiele der beanspruchen Vorrichtung anhand der Figuren 1 bis 12 beschrieben, wobei
- Fig. 1:: eine perspektivische Ansicht einer C-förmigen Schiene zeigt, wie sie im Rahmen der vorliegenden Erfindung verwendet werden kann,
- Fig. 2 und 3:: eine Seitenansicht und eine Draufsicht eines Befestigungselements zeigt, wie es im Rahmen der vorliegenden Erfindung verwendet werden kann,
- Fig. 4 bis 6:: eine Ausführungsform einer Vorrichtung gemäß der vorliegenden Erfindung mit Rastnocken zeigt,
- Fig. 7:: eine perspektivische Ansicht der in den Fig. 4 bis 6 gezeigten Ausführungsform der Vorrichtung mit darin angeordneten Befestigungselementen zeigt,
- Fig. 8:: eine Ausführungsform einer Vorrichtung zur Herstellung der in den Fig. 4 bis 6 gezeigten Halteeinrichtung zeigt,
- Fig. 9 bis 11:: eine weitere Ausführungsform einer Vorrichtung gemäß der vorliegenden Erfindung zeigt, und
- Fig. 12:: die Befüllung einer Halterung eines Setzgeräts mit Hilfe einer erfindungsgemäßen Vorrichtung zeigt.

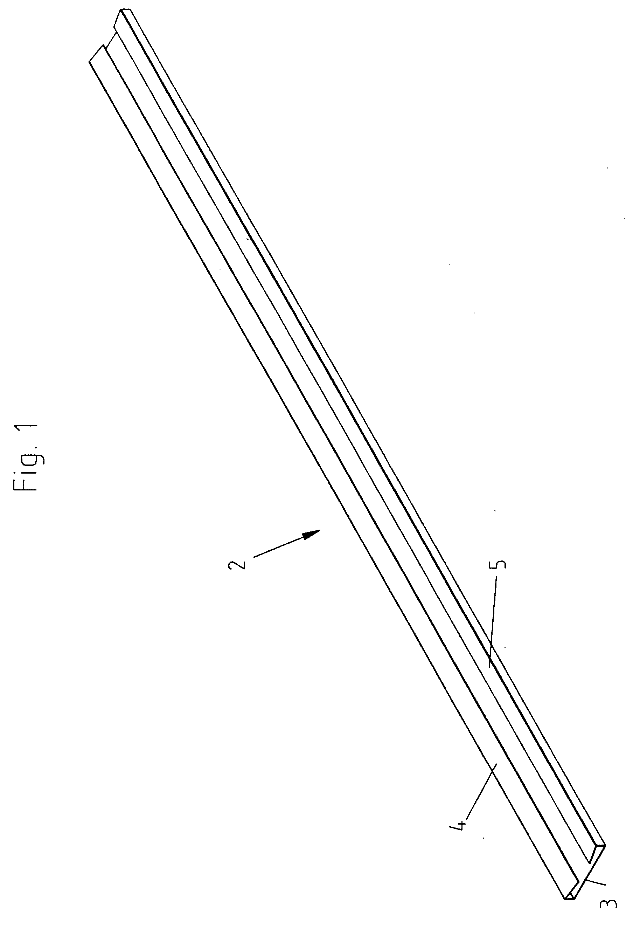

Fig. 1 zeigt eine perspektivische Ansicht einer C-förmigen Schiene 2, wie sie im Rahmen der vorliegenden Erfindung verwendet werden kann. Die Schiene 2 hat eine Grundfläche 3 und zwei an der gegenüberliegenden Seite angeordnete Laschen 4, 5. Die beiden Laschen 4, 5 erstrecken sich entlang der Längsachse der Schiene.

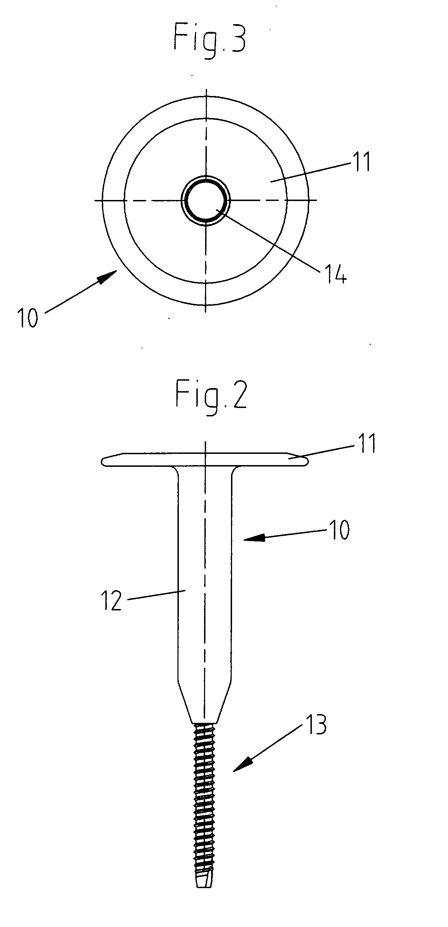

Fig. 2 zeigt eine Seitenansicht eines Befestigungselements 10, wie es im Rahmen der vorliegenden Erfindung verwendet werden kann. Dieses Befestigungselement 10 besteht aus einem Teller bzw. einem tellerförmigen Kopf 11 und einen sich daran anschließenden Schaft 12. In dem in Fig. 2 dargestellten Befestigungselement 10 befindet sich eine Schraube 13, mit der das Befestigungselement 10 an einer Unterkonstruktion befestigt werden kann.

Fig. 3 zeigt eine Draufsicht auf das in Fig. 2 dargestellte Befestigungselement 10. Dabei ist der Teller 11 des Befestigungselements 10 und eine in der Mitte des Tellers 11 angeordneten Öffnung 14 dargestellt. Diese Öffnung 14 wird üblicherweise verwendet, um eine in dem Befestigungselement 10 angeordnete Schraube 13 zu montieren.

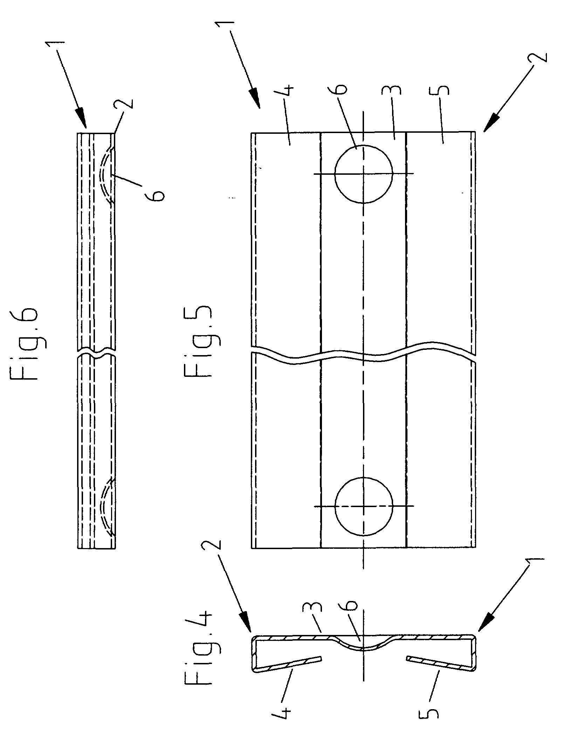

In den Fig. 4 bis 6 wird eine Ausführungsform einer Vorrichtung 1 gemäß der vorliegenden Erfindung mit Rastnocken 6 dargestellt. Dabei zeigt Fig. 4 einen Schnitt entlang der Querachse einer Ausführungsform der C-förmigen Schiene 2. In dieser Ausführungsform enthält die Schiene 1 an der Grundfläche 3 eine Ausbeulung 6, die die oben beschriebene Rastnocke bildet, als Halteeinrichtung für die Befestigungselemente 10. Wie in den Fig. 5 und 6 zu sehen ist, hat diese Rastnocke 6 eine runde Grundfläche und ist jeweils an den Enden der Schiene angeordnet.

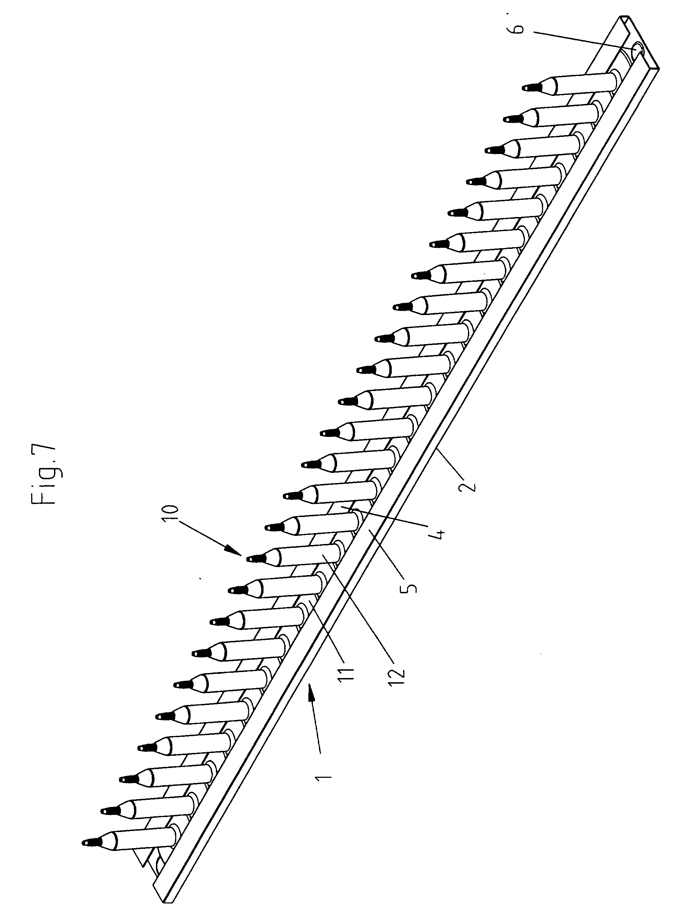

Fig. 7 zeigt eine erfindungsgemäße Schiene 1 mit mehreren Befestigungselementen 10. Dabei werden die Teller 11 der Befestigungselemente 10 von den Laschen 4, 5 der C-förmigen Schiene 2 beidseitig umfaßt. Die Befestigungselemente 10 sind zwischen der Grundfläche 3 und den Laschen 4, 5 der Schiene 2 überlappend angeordnet, das heißt der Teller 11 eines Befestigungselements 10 stößt gegen den Schaft 12 des benachbarten Befestigungselements 10. An mindestens einem Ende der Schiene 1 befindet sich eine Halteeinrichtung 6, in dem vorliegenden Beispiel handelt es sich um die in den Fig. 4 bis 6 dargestellte Rastnocke 6.

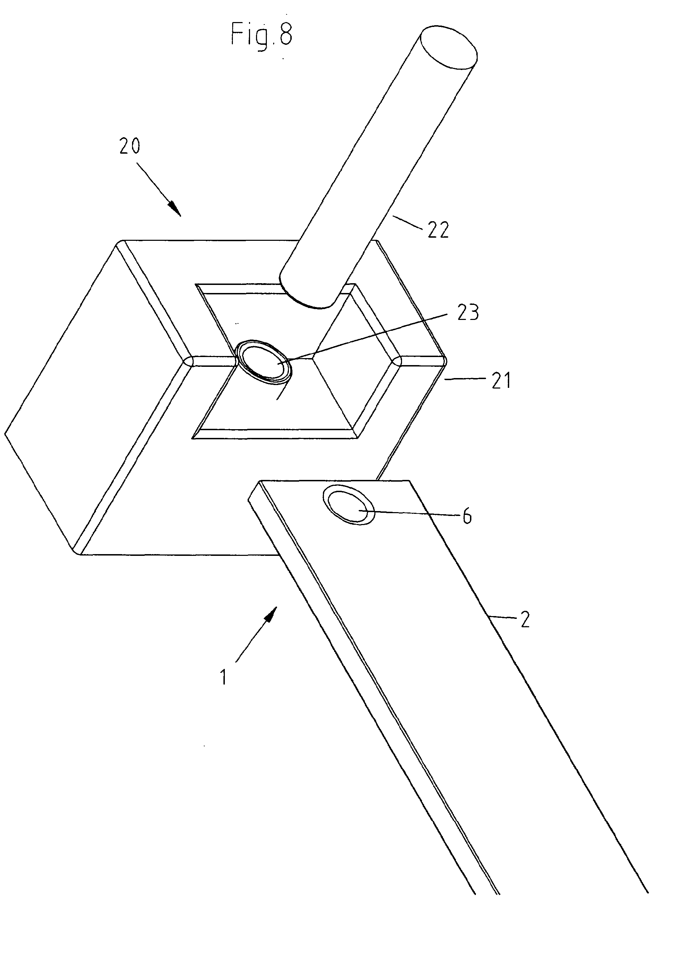

Fig. 8 zeigt ein Beispiel für eine Vorrichtung 20 mit der eine solche Rastnocke 6 in einer Schiene 2 gebildet werden kann. Die Vorrichtung 20 besteht aus einer Form 21 und einem Stempel 22. In der Form 21 gibt es eine Vertiefung 23, die im wesentlichen der Form der Spitze des Stempels 22 entspricht. Zur Bildung der Rastnocke 6 in einer Schiene 2 wird die Schiene 2 in die Form 21 eingeführt, so daß ein Ende der Schiene 2 über der Vertiefung 23 in der Form 21 angeordnet ist. Dann drückt in einem nächsten Schritt der Stempel 22 gegen die der Form 21 abgewandten Seite der Schiene 2 und preßt den entsprechenden Bereich der Schiene 2 in die Vertiefung 23. In Abhängigkeit von dem Material der Schiene 2 sind für dieses Verfahren unterschiedliche Temperaturen vorteilhaft.

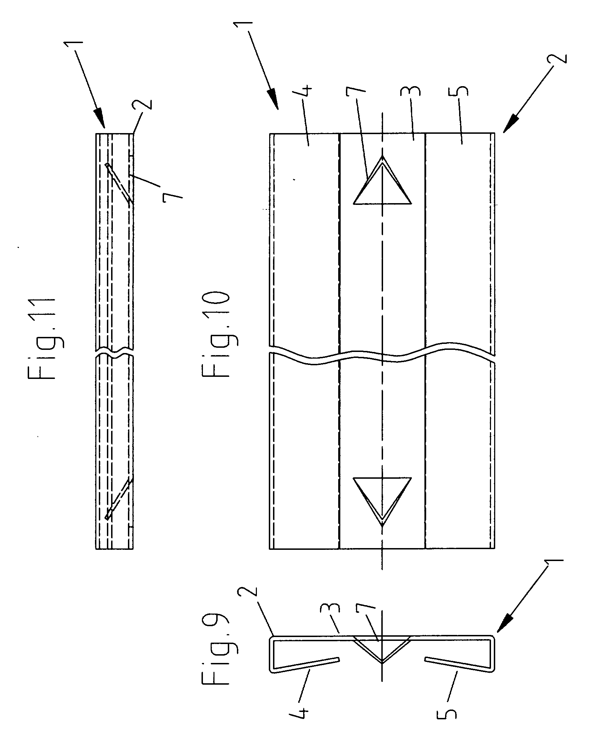

In den Fig. 9 bis 11 wird eine weitere Ausführungsform der vorliegenden Erfindung beschrieben. Im Gegensatz zu der in den Fig. 4 bis 6 beschriebenen Ausführungsform wird hier die Halteeinrichtung nicht durch eine Ausbeulung, sondern durch eine Lasche 7 gebildet. Diese Lasche 7 wird beispielsweise aus der Grundfläche 3 der C-förmigen Schiene ausgestanzt und dann nach oben, das heißt von der Grundfläche 3 der Schiene 2 in Richtung der Laschen 4, 5 gebogen. Auch diese Lasche 7 hält die in der Schiene 2 angeordneten Befestigungselemente 10 in der Schiene 2 und ermöglicht aber auch bei einer Kraftanwendung auf die Befestigungselemente 10 in Richtung der Lasche 7 ein Überwinden dieser Lasche 7 ohne Veränderung der Lasche 7. In der vorliegenden Ausführungsform ist diese Lasche 7 dreieckig. Im Rahmen der vorliegenden Erfindung sind allerdings auch andere Formen der Halteeinrichtung denkbar.

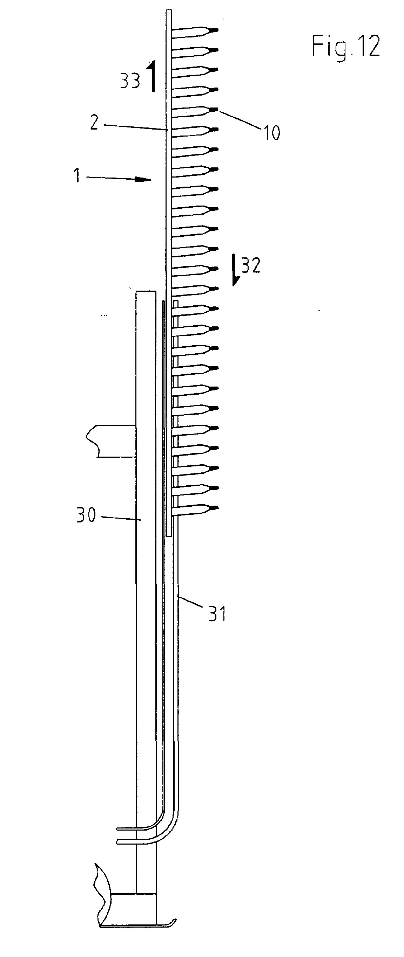

Fig. 12 zeigt den Vorgang des Nachfüllens der Befestigungselemente in eine Halterung 31 an einem Setzgerät 30. Dabei wird die Vorrichtung 1 mit den darin aufgereihten Befestigungselementen 10 in die Halterung 31 an dem Setzgerät 30 geschoben. Durch die Kraftanwendung auf die Befestigungselemente 10 in Richtung 32 und das gleichzeitige Herausziehen der Vorrichtung 1 in Richtung 33, werden die Befestigungselemente 10 kontrolliert an die Halterung 31 des Setzgeräts 30 abgegeben.

Die vorliegende Erfindung stellt damit eine Vorrichtung und ein Verfahren zum Herstellen dieser Vorrichtung zur Aufnahme von Befestigungselementen bereit, mit welchem Befestigungselemente auf einfache Weise transportiert und in ein entsprechendes Setzgerät nachgefüllt werden können.

## Patentansprüche

1. Vorrichtung (1) zur Aufnahme von mindestens zwei Befestigungselementen (10), wobei die Befestigungselemente (10) einen tellerförmigen Kopf (11) und einen Schaft (12) aufweisen, und wobei die Vorrichtung (1) eine C-förmige Schiene (2) zum beidseitigen Umfassen des tellerförmigen Kopfes (11) der Befestigungselemente (10) aufweist,
**dadurch gekennzeichnet, daß**
die Vorrichtung (1) an mindestens einem Ende der C-förmigen Schiene (2) eine Halteeinrichtung (6, 7) aufweist, die die Befestigungselemente (10) in der C-förmigen Schiene (2) hält und die durch Kraftanwendung auf die Befestigungselemente (10) in Richtung der Halteeinrichtung (6, 7) entlang der C-förmigen Schiene (2) ohne Veränderung der Halteeinrichtung (6, 7) überwunden werden kann.

2. Vorrichtung (1) nach Anspruch 1, **dadurch gekennzeichnet, daß** die Halteeinrichtung (6, 7) ein Rastnocken (6) auf der C-förmigen Schiene (2) ist.

3. Vorrichtung (1) nach Anspruch 2, **dadurch gekennzeichnet, daß** der Rastnocken (6) an der der Öffnung der C-förmigen Schiene (2) gegenüberliegenden Seite angeordnet ist.

4. Vorrichtung (1) nach einem der Ansprüche 2 oder 3, **dadurch gekennzeichnet, daß** die Halteeinrichtung (6, 7) einen Durchmesser aufweist, der dem Durchmesser einer Öffnung (14) in dem Kopf (11) des Befestigungselements (10) entspricht.

5. Vorrichtung (1) nach einem der Ansprüche 1 bis 4, **dadurch gekennzeichnet, daß** die Vorrichtung (1) aus Kunststoff besteht.

6. Verfahren zur Herstellung einer Vorrichtung (1) zur Aufnahme von Befestigungselementen (10), wobei das Verfahren die folgenden Schritte umfaßt:
- Befüllung einer C-förmigen Schiene (2) mit Befestigungselementen (10), und
- Anbringung einer Halteeinrichtung (6, 7) an mindestens einem Ende der C-förmigen Schiene (2),
wobei die Halteeinrichtung (6, 7) die Befestigungselemente (10) in der C-förmigen Schiene (2) hält und die Halteeinrichtung (6, 7) durch Kraftanwendung auf die Befestigungselemente (10) in Richtung der Halteeinrichtung (6, 7) entlang der C-förmigen Schiene (2) ohne Veränderung der Halteeinrichtung (6, 7) überwunden werden kann.

7. Verfahren nach Anspruch 6, wobei die Halteeinrichtung (6, 7) ein Rastnocken (6) auf der C-förmigen Schiene (2) ist.

8. Verfahren nach Anspruch 7, **dadurch gekennzeichnet, daß** der Rastnocken (6) durch thermoplastische Verformung an einem Ende der C-förmigen Schiene (2) gebildet wird.

9. Verwendung einer Vorrichtung (1) nach einem der Vorrichtungsansprüche zur Aufnahme von Befestigungselementen (10).

10. Verwendung einer Vorrichtung (1) nach einem der Vorrichtungsansprüche zur Aufnahme von Haltetellern aus Kunststoff zur Befestigung von Dämmstoffen und Dachbahnen an einer Unterkonstruktion.
